# EUROPEAN PATENT APPLICATION

(11) **EP 4 642 154 A1**
(43) Date of publication of application: **29.10.2025**
(21) Application number: 23913981.9
(22) Date of filing: 04.01.2023
(51) Int. Cl.: H04W 88/08, H04L 41/082

(54) **COMMUNICATION METHOD AND RELATED DEVICE**

(71) Applicant: Huawei Technologies Co., Ltd., Shenzhen, Guangdong 518129 (CN)
(72) Inventor: HU, Lianfeng, Shenzhen, Guangdong 518129 (CN); WEI, Zongkun, Shenzhen, Guangdong 518129 (CN)
(74) Representative: Pfenning, Meinig & Partner mbB
(86) International application number: PCT/CN2023/070445
(87) International publication number: WO 2024/145822

(57) **Abstract**

This application provides a communication method and a related apparatus, so that a communication apparatus can perform communication on a link between a radio frequency unit and a distributed unit in a target signal processing manner in N signal processing manners based on an indication of first information, and can implement communication between the radio frequency unit and the distributed unit without manual configuration, thereby reducing consumption of labor and material resources, and improving flexibility of communication between the radio frequency unit and the distributed unit. **In** the method, a first communication apparatus receives first information, where the first information indicates a target signal processing manner in N signal processing manners, and N is an integer greater than 1. The first communication apparatus performs communication on a link between a radio frequency unit and a distributed unit in the target signal processing manner.

## Description

### TECHNICAL FIELD

This application relates to the communication field, and in particular, to a communication method and a related device.

### BACKGROUND

Wireless communication is transmission communication performed between a plurality of communication nodes without propagation through a conductor or a cable. Generally, a network device and a terminal device may be used as different communication nodes to perform communication in a wireless communication manner.

In a wireless communication scenario, a network device may be deployed in a distributed manner. For example, function entities configured to process signals in the network device are split, some of the function entities are carried on a specific device, and the other function entities are carried on another device, to improve a coverage capability and deployment flexibility of the network device.

However, in the foregoing implementation process, how to implement efficient configuration of a communication manner between different function entities in the network device is an urgent technical problem to be resolved.

### SUMMARY

This application provides a communication method and a related apparatus, so that a communication apparatus can perform communication on a link between a radio frequency unit and a distributed unit in a target signal processing manner in N signal processing manners based on an indication of first information, and can implement communication between the radio frequency unit and the distributed unit without manual configuration, thereby reducing consumption of labor and material resources, and improving flexibility of communication between the radio frequency unit and the distributed unit.

A first aspect of this application provides a communication method. The method is applied to a first communication apparatus, and the method is performed by the first communication apparatus, or the method is performed by some components (such as a processor, a chip, or a chip system) in the first communication apparatus, or the method may be implemented by a logic module or software that can implement all or some functions of the first communication apparatus. In the first aspect and possible implementations of the first aspect, an example in which the method is performed by the first communication apparatus is used for description. In the method, the first communication apparatus receives first information, where the first information indicates a target signal processing manner in N signal processing manners, and N is an integer greater than 1. The first communication apparatus performs communication on a link between a radio frequency unit and a distributed unit in the target signal processing manner.

Based on the foregoing technical solution, the first information received by the first communication apparatus indicates the target signal processing manner in the N signal processing manners, and the first communication apparatus performs communication on the link between the radio frequency unit and the distributed unit in the target signal processing manner. Therefore, in comparison with an implementation process in which the radio frequency unit and the distributed unit that support a plurality of signal processing manners can be compatible with each other only through manual configuration, in the foregoing technical solution, the communication apparatus can perform communication on the link between the radio frequency unit and the distributed unit in the target signal processing manner in the N signal processing manners based on an indication of the first information, and can implement communication between the radio frequency unit and the distributed unit without manual configuration, thereby reducing consumption of labor and material resources, and improving flexibility of communication between the radio frequency unit and the distributed unit.

Optionally, the first information may include an identifier, an index number, a version number, or another implementation of the target signal processing manner in the N signal processing manners. This is not limited herein.

In a possible implementation of the first aspect, the method is applied to the radio frequency unit or the distributed unit.

Based on the foregoing technical solution, when the method is applied to the radio frequency unit, the first communication apparatus may be the radio frequency unit, so that the radio frequency unit can clearly perform communication on the link between the radio frequency unit and the distributed unit in the target signal processing manner in the N signal processing manners based on the first information from the distributed unit (or a network management device). When the method is applied to the distributed unit, the first communication apparatus may be the distributed unit, so that the distributed unit can clearly perform communication on the link between the radio frequency unit and the distributed unit in the target signal processing manner in the N signal processing manners based on the first information from the radio frequency unit (or a network management device).

It should be understood that in this application, the radio frequency unit (radio unit, RU) is a network device having a radio frequency signal processing function, the distributed unit (distributed unit, DU) is a network device having a baseband signal processing function, and the radio frequency unit and the distributed unit may have other names.

For example, the radio frequency unit is radio equipment (radio equipment, RE) and the distributed unit is a radio equipment controller (radio equipment controller, REC).

For another example, the radio frequency unit is a remote radio unit (remote radio unit, RRU) and the distributed unit is a building baseband unit (building baseband unit, BBU).

For another example, the radio frequency unit is an active antenna unit (active antenna unit, AAU) and the distributed unit is a BBU.

For another example, the radio frequency unit is a radio unit (radio unit, RU) and the distributed unit is a digital unit (digital unit, DU).

Optionally, the link between the radio frequency unit and the distributed unit may be referred to as a fronthaul link, a fronthaul network, or the like.

Optionally, a communication interface between the radio frequency unit and the distributed unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

In a possible implementation of the first aspect, before that the first communication apparatus receives first information, the method further includes: The first communication apparatus sends second information, where the second information indicates that the N signal processing manners are supported.

Based on the foregoing technical solution, before the first communication apparatus receives the first information, the first communication apparatus may further send the second information indicating that the first communication apparatus supports the N signal processing manners, so that a receiver of the second information can use the second information as one of bases for determining the first information, to enable a target signal processing manner determined by the receiver to be a signal processing manner supported by the first communication apparatus, so as to avoid incompatibility.

Optionally, the second information may include identifiers, index numbers, version numbers, or other implementations of the N signal processing manners. This is not limited herein.

In a possible implementation of the first aspect, before that the first communication apparatus sends second information, the method further includes: The first communication apparatus receives third information, where the third information is used to request pairing.

Based on the foregoing technical solution, before the first communication apparatus sends the second information indicating that the N signal processing manners are supported, the first communication apparatus may further receive the third information that is from the distributed unit (or the network management device) and that is used to request pairing, in other words, the first communication apparatus triggers sending of the second information based on the third information. Therefore, the foregoing technical solution can be applied to a scenario in which the first communication apparatus is triggered to request pairing.

Optionally, the third information (or the first information, the second information, or the like mentioned below) is used to request pairing, and may be expressed as being used to discover (discover) the first communication apparatus, or being used to request to access the first communication apparatus, or may be expressed in another manner. This is not limited herein.

Optionally, before that the first communication apparatus sends second information, the method further includes: The first communication apparatus sends other information used to request pairing, to implement pairing by using the other information.

In a possible implementation of the first aspect, the first information is further used to request pairing, or the second information is further used to request pairing.

Based on the foregoing technical solution, the first information received by the first communication apparatus (or the second information sent by the first communication apparatus) may be further used to request pairing, to reduce overheads by multiplexing the first information and the second information.

Optionally, when the first information is further used to request pairing, the first information may be carried by using a same field, and the same field indicates the target signal processing manner in the N signal processing manners and indicates that pairing is requested. Alternatively, the first information may be carried by using at least two fields, one of the at least two fields indicates the target signal processing manner in the N signal processing manners, and the other one of the at least two fields indicates that pairing is requested. Similarly, when the second information is further used to request pairing, the second information may be carried by using a same field, and the same field indicates that the N signal processing manners are supported and indicates that pairing is requested. Alternatively, the first information may be carried by using at least two fields, one of the at least two fields indicates that the N signal processing manners are supported, and the other one of the at least two fields indicates that pairing is requested.

In a possible implementation of the first aspect, the second information further indicates priorities of the N signal processing manners.

Based on the foregoing technical solution, the second information sent by the first communication apparatus may further indicate the priorities of the N signal processing manners, so that the receiver of the second information can use the priorities as one of the bases for determining the first information, to enable the first information determined by the receiver to meet the priorities.

A second aspect of this application provides a communication method. The method is applied to a second communication apparatus, and the method is performed by the second communication apparatus, or the method is performed by some components (such as a processor, a chip, or a chip system) in the second communication apparatus, or the method may be implemented by a logic module or software that can implement all or some functions of the second communication apparatus. In the second aspect and possible implementations of the second aspect, an example in which the method is performed by the second communication apparatus is used for description. In the method, the second communication apparatus determines first information, where the first information indicates a target signal processing manner in N signal processing manners, and N is an integer greater than 1. The second communication apparatus sends the first information.

Based on the foregoing technical solution, the first information determined and sent by the second communication apparatus indicates the target signal processing manner in the N signal processing manners, so that after a first communication apparatus receives the first information, the first communication apparatus can perform communication on a link between a radio frequency unit and a distributed unit in the target signal processing manner. Therefore, in comparison with an implementation process in which the radio frequency unit and the distributed unit that support a plurality of signal processing manners can be compatible with each other only through manual configuration, in the foregoing technical solution, the communication apparatus can perform communication on the link between the radio frequency unit and the distributed unit in the target signal processing manner in the N signal processing manners based on an indication of the first information, and can implement communication between the radio frequency unit and the distributed unit without manual configuration, thereby reducing consumption of labor and material resources, and improving flexibility of communication between the radio frequency unit and the distributed unit.

In a possible implementation of the second aspect, the method further includes: The second communication apparatus receives second information, where the second information indicates that the N signal processing manners are supported, and the first information is determined based on the second information.

Based on the foregoing technical solution, before the second communication apparatus sends the first information, the second communication apparatus may further receive the second information indicating that the first communication apparatus supports the N signal processing manners, so that the second communication apparatus can use the second information as one of bases for determining the first information, to enable a target signal processing manner determined by the second communication apparatus to be a signal processing manner supported by the first communication apparatus, so as to avoid incompatibility.

In a possible implementation of the second aspect, before that the second communication apparatus receives second information, the method further includes: The second communication apparatus sends third information, where the third information is used to request pairing.

Based on the foregoing technical solution, before the second communication apparatus receives the second information indicating that the N signal processing manners are supported, the second communication apparatus may further send the third information used to request pairing, so that after the first communication apparatus receives the third information, the first communication apparatus can trigger sending of the second information based on the third information. Therefore, the foregoing technical solution can be applied to a scenario in which the second communication apparatus actively initiates a pairing request.

Optionally, the third information (or the first information, the second information, or the like mentioned below) is used to request pairing, and may be expressed as being used to discover (discover) the first communication apparatus, or being used to request to access the first communication apparatus, or may be expressed in another manner. This is not limited herein.

Optionally, before that the second communication apparatus receives second information, the method further includes: The second communication apparatus receives other information used to request pairing, to implement pairing by using the other information.

In a possible implementation of the second aspect, the first information is further used to request pairing, or the second information is further used to request pairing.

Based on the foregoing technical solution, the first information sent by the second communication apparatus (or the second information received by the second communication apparatus) may be further used to request pairing, to reduce overheads by multiplexing the first information and the second information.

In a possible implementation of the second aspect, the second information further indicates priorities of the N signal processing manners, and the target signal processing manner is determined based on the priorities of the N signal processing manners.

Based on the foregoing technical solution, the second information received by the second communication apparatus may further indicate the priorities of the N signal processing manners, so that the second communication apparatus can use the priorities as one of the bases for determining the first information, to enable the first information determined by the receiver to meet the priorities.

In a possible implementation of the second aspect, the method is applied to the radio frequency unit, and the second information is from the distributed unit.

Based on the foregoing technical solution, when the foregoing method is applied to the radio frequency unit, that is, the second communication apparatus may be the radio frequency unit, the second information from the distributed unit may indicate that the distributed unit supports the N signal processing manners, so that the radio frequency unit serves as a decision party of a signal processing manner, to implement a process of determining a signal processing manner on the link between the radio frequency unit and the distributed unit.

In a possible implementation of the second aspect, the first information is determined based on the second information and fourth information, where the fourth information indicates M signal processing manners supported by the radio frequency unit on the link, M is a positive integer, and the target signal processing manner is included in the M signal processing manners.

Based on the foregoing technical solution, when the foregoing method is applied to the radio frequency unit, the target signal processing manner used for communication on the link between the radio frequency unit and the distributed unit may be further determined based on the fourth information. The fourth information indicates the M signal processing manners supported by the radio frequency unit on the link, to enable all target signal processing manners determined by the radio frequency unit to be signal processing manners supported by the radio frequency unit and the distributed unit, so as to avoid incompatibility.

In a possible implementation of the second aspect, the method further includes: The second communication apparatus receives first indication information. When the first indication information indicates to determine the target signal processing manner based on a priority corresponding to the radio frequency unit, the second communication apparatus determines the target signal processing manner based on priorities of the M signal processing manners; and/or when the first indication information indicates to determine the target signal processing manner based on a priority corresponding to the distributed unit, the second communication apparatus determines the target signal processing manner based on the priorities of the N signal processing manners.

Optionally, M is equal to N.

Based on the foregoing technical solution, when the foregoing method is applied to the radio frequency unit, the radio frequency unit may further receive the first indication information, so that the radio frequency unit clearly determines, based on the first indication information, that the priority corresponding to the radio frequency unit (or the distributed unit) is used as one of bases for determining the target signal processing manner.

In a possible implementation of the second aspect, the method is applied to the distributed unit, and the second information is from the radio frequency unit.

Based on the foregoing technical solution, when the foregoing method is applied to the distributed unit, that is, the second communication apparatus may be the distributed unit, the second information from the radio frequency unit may indicate that the radio frequency unit supports the N signal processing manners, so that the distributed unit serves as a decision party of a signal processing manner, to implement a process of determining a signal processing manner on the link between the radio frequency unit and the distributed unit.

In a possible implementation of the second aspect, the first information is determined based on the second information and fifth information, where the fifth information indicates K signal processing manners supported by the distributed unit on the link, K is a positive integer, and the target signal processing manner is included in the K signal processing manners.

Optionally, K is equal to N.

Based on the foregoing technical solution, when the foregoing method is applied to the distributed unit, the target signal processing manner used for communication on the link between the radio frequency unit and the distributed unit may be further determined based on the fifth information. The fifth information indicates M signal processing manners supported by the distributed unit on the link, to enable all target signal processing manners determined by the distributed unit to be signal processing manners supported by the radio frequency unit and the distributed unit, so as to avoid incompatibility.

In a possible implementation of the second aspect, the method further includes: The second communication apparatus receives second indication information. When the second indication information indicates to determine the target signal processing manner based on a priority corresponding to the radio frequency unit, the second communication apparatus determines the target signal processing manner based on the priorities of the N signal processing manners; and/or when the first indication information indicates to determine the target signal processing manner based on a priority corresponding to the distributed unit, the second communication apparatus determines the target signal processing manner based on priorities of the K signal processing manners.

Based on the foregoing technical solution, when the foregoing method is applied to the distributed unit, the distributed unit may further receive the second indication information, so that the distributed unit clearly determines, based on the second indication information, that the priority corresponding to the radio frequency unit (or the distributed unit) is used as one of the bases for determining the target signal processing manner.

In a possible implementation of the second aspect, the method is applied to a network management device. The second information is from the distributed unit, the first information is determined based on the second information and fifth information, the fifth information indicates K signal processing manners supported by the distributed unit on the link, K is a positive integer, and the target signal processing manner is included in the K signal processing manners.

Based on the foregoing technical solution, when the foregoing method is applied to the network management device, that is, the second communication apparatus may be the network management device (for example, a remote network management device, an operation maintenance center (Operation Management Center, OMC), or a base station control unit). The second information from the distributed unit may indicate that the distributed unit supports the K signal processing manners, so that the network management device serves as a decision party of a signal processing manner, to implement a process of determining a signal processing manner on the link between the radio frequency unit and the distributed unit.

In a possible implementation of the second aspect, the method further includes: The second communication apparatus receives the fifth information.

Based on the foregoing technical solution, when the foregoing method is applied to the network management device, the second communication apparatus may further receive the fifth information from the distributed unit, to determine, by interacting with the distributed unit, the K signal processing manners supported by the distributed unit on the link.

Optionally, the network management device may determine the fifth information in a preconfiguration manner or a manual configuration manner.

In a possible implementation of the second aspect, the method is applied to a network management device. The second information is from the radio frequency unit, the first information is determined based on the second information and fourth information, the fourth information indicates M signal processing manners supported by the radio frequency unit on the link, M is a positive integer, and the target signal processing manner is included in the M signal processing manners.

Based on the foregoing technical solution, when the foregoing method is applied to the network management device, that is, the second communication apparatus may be the network management device (for example, a remote network management device, an operation maintenance center (Operation Management Center, OMC), or a base station control unit). The second information from the radio frequency unit may indicate that the radio frequency unit supports the M signal processing manners, so that the network management device serves as a decision party of a signal processing manner, to implement a process of determining a signal processing manner on the link between the radio frequency unit and the distributed unit.

In a possible implementation of the second aspect, the method further includes: The second communication apparatus receives the fourth information.

Based on the foregoing technical solution, when the foregoing method is applied to the network management device, the second communication apparatus may further receive the fourth information from the radio frequency unit, to determine, by interacting with the radio frequency unit, the M signal processing manners supported by the radio frequency unit on the link.

Optionally, the network management device may determine the fourth information in a preconfiguration manner or a manual configuration manner.

In a possible implementation of the first aspect or the second aspect, the N signal processing manners include a downlink signal processing manner, and the downlink signal processing manner indicates to perform at least one of the following processing on a downlink signal: encoding, rate matching, scrambling, modulation, layer mapping, precoding, resource element (resource element, RE) mapping, digital beam mapping (beamforming, BF), inverse fast Fourier transform (invert fast Fourier transform, IFFT), cyclic prefix (cyclic prefix, CP) addition, digital-to-analog conversion, or analog BF.

Based on the foregoing technical solution, the N signal processing manners used for communication on the link between the radio frequency unit and the distributed unit may include the downlink signal processing manner. The downlink signal processing manner may indicate at least one of the foregoing processing processes corresponding to the downlink signal transmitted on the link by the radio frequency unit (or the distributed unit), to improve flexibility of implementing the solution.

It should be understood that in this application, the downlink signal may be understood as a signal sent by a network device (where the network device includes the radio frequency unit and/or the distributed unit) to a terminal device, and an uplink signal mentioned below may be understood as a signal sent by the terminal device to the network device.

In a possible implementation of the first aspect or the second aspect, the N signal processing manners include an uplink signal processing manner, and the uplink signal processing manner indicates to perform at least one of the following processing on an uplink signal: decoding, de-rate matching, descrambling, demodulation, inverse discrete Fourier transform (inverse discrete Fourier transform, IDFT), channel equalization, RE demapping, digital BF, fast Fourier transform (fast Fourier transform, FFT), CP removal, analog-to-digital conversion, or analog BF.

Based on the foregoing technical solution, the N signal processing manners used for communication on the link between the radio frequency unit and the distributed unit may include the uplink signal processing manner. The uplink signal processing manner may indicate at least one of the foregoing processing processes corresponding to the uplink signal transmitted on the link by the radio frequency unit (or the distributed unit), to improve flexibility of implementing the solution.

A third aspect of this application provides a communication apparatus. The communication apparatus can implement the method according to any one of the first aspect or the possible implementations of the first aspect. The communication apparatus includes a corresponding unit or module configured to perform the foregoing method. The unit or module included in the communication apparatus may be implemented by software and/or hardware. For example, the apparatus may be a control device, or the apparatus may be a component (for example, a processor, a chip, or a chip system) in a control device, or the apparatus may be a logic module or software that can implement all or some functions of a control device.

The communication apparatus includes a processing module and a transceiver module. The transceiver module is configured to receive first information, where the first information indicates a target signal processing manner in N signal processing manners, and N is an integer greater than 1. The processing module is configured to perform communication on a link between a radio frequency unit and a distributed unit in the target signal processing manner.

In a possible implementation of the third aspect, the transceiver module is further configured to send second information, where the second information indicates that the N signal processing manners are supported.

In a possible implementation of the third aspect, the transceiver module is further configured to receive third information, where the third information is used to request pairing.

In a possible implementation of the third aspect, the second information is further used to request pairing.

In a possible implementation of the third aspect, the second information further indicates priorities of the N signal processing manners.

In a possible implementation of the third aspect, the apparatus used in the radio frequency unit or the distributed unit.

A fourth aspect of this application provides a communication apparatus. The communication apparatus can implement the method according to any one of the second aspect or the possible implementations of the second aspect. The communication apparatus includes a corresponding unit or module configured to perform the foregoing method. The unit or module included in the communication apparatus may be implemented by software and/or hardware. For example, the apparatus may be a control device, or the apparatus may be a component (for example, a processor, a chip, or a chip system) in a control device, or the apparatus may be a logic module or software that can implement all or some functions of a control device.

The communication apparatus includes a processing module and a transceiver module. The processing module is configured to determine first information, where the first information indicates a target signal processing manner in N signal processing manners, and N is an integer greater than 1. The transceiver module is configured to send the first information.

In a possible implementation of the fourth aspect, the transceiver module is further configured to receive second information, where the second information indicates that the N signal processing manners are supported, and the first information is determined based on the second information.

In a possible implementation of the fourth aspect, the transceiver module is further configured to send third information, where the third information is used to request pairing.

In a possible implementation of the fourth aspect, the second information is further used to request pairing.

In a possible implementation of the fourth aspect, the second information further indicates priorities of the N signal processing manners, and the target signal processing manner is determined based on the priorities of the N signal processing manners.

In a possible implementation of the fourth aspect, the apparatus is used in a radio frequency unit, and the second information is from a distributed unit.

In a possible implementation of the fourth aspect, the first information is determined based on the second information and fourth information, where the fourth information indicates M signal processing manners supported by the radio frequency unit on a link, M is a positive integer, and the target signal processing manner is included in the M signal processing manners.

In a possible implementation of the fourth aspect, the transceiver module is further configured to receive first indication information. When the first indication information indicates to determine the target signal processing manner based on a priority corresponding to the radio frequency unit, the second communication apparatus determines the target signal processing manner based on priorities of the M signal processing manners; and/or when the first indication information indicates to determine the target signal processing manner based on a priority corresponding to the distributed unit, the second communication apparatus determines the target signal processing manner based on the priorities of the N signal processing manners.

In a possible implementation of the fourth aspect, the apparatus is used in the distributed unit, and the second information is from the radio frequency unit.

In a possible implementation of the fourth aspect, the first information is determined based on the second information and fifth information, where the fifth information indicates K signal processing manners supported by the distributed unit on the link, K is a positive integer, and the target signal processing manner is included in the K signal processing manners.

In a possible implementation of the fourth aspect, the transceiver module is further configured to receive second indication information. When the second indication information indicates to determine the target signal processing manner based on the priority corresponding to the radio frequency unit, the second communication apparatus determines the target signal processing manner based on the priorities of the N signal processing manners; and/or when the first indication information indicates to determine the target signal processing manner based on the priority corresponding to the distributed unit, the second communication apparatus determines the target signal processing manner based on priorities of the K signal processing manners.

In a possible implementation of the fourth aspect, the apparatus is used in a network management device. The second information is from the distributed unit, the first information is determined based on the second information and fifth information, the fifth information indicates K signal processing manners supported by the distributed unit on the link, K is a positive integer, and the target signal processing manner is included in the K signal processing manners.

In a possible implementation of the fourth aspect, the transceiver module is further configured to receive the fifth information.

In a possible implementation of the fourth aspect, the apparatus is used in the network management device. The second information is the radio frequency unit, the first information is determined based on the second information and fourth information, the fourth information indicates M signal processing manners supported by the radio frequency unit on the link, M is a positive integer, and the target signal processing manner is included in the M signal processing manners.

In a possible implementation of the fourth aspect, the transceiver module is further configured to receive the fourth information.

In a possible implementation of the third aspect or the fourth aspect, the N signal processing manners include a downlink signal processing manner, and the downlink signal processing manner indicates to perform at least one of the following processing on a downlink signal: encoding, rate matching, scrambling, modulation, layer mapping, precoding, resource element RE mapping, digital beam mapping BF, inverse fast Fourier transform IFFT, cyclic prefix CP addition, digital-to-analog conversion, or analog BF.

In a possible implementation of the third aspect or the fourth aspect, the N signal processing manners include an uplink signal processing manner, and the uplink signal processing manner indicates to perform at least one of the following processing on an uplink signal: decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

A fifth aspect of this application provides a communication apparatus, including at least one processor. The at least one processor is coupled to a memory, and the processor is configured to perform the method according to any one of the first aspect or the possible implementations of the first aspect.

For example, the memory is configured to store a program or instructions, and the at least one processor is configured to execute the program or the instructions, so that the apparatus implements the method according to any one of the first aspect or the possible implementations of the first aspect.

A sixth aspect of this application provides a communication apparatus, including at least one processor. The at least one processor is coupled to a memory, and the processor is configured to perform the method according to any one of the second aspect or the possible implementations of the second aspect.

For example, the memory is configured to store a program or instructions, and the at least one processor is configured to execute the program or the instructions, so that the apparatus implements the method according to any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

A ninth aspect of this application provides a computer-readable storage medium. The computer-readable storage medium is configured to store one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

A tenth aspect of this application provides a computer program product (or referred to as a computer program). When the computer program product is executed by a processor, the processor performs the method according to any one of the first aspect or the possible implementations of the first aspect, or the processor performs the method according to any one of the second aspect or the possible implementations of the second aspect.

An eleventh aspect of this application provides a chip system. The chip system includes at least one processor, configured to support a communication apparatus in implementing a function according to any one of the first aspect or the possible implementations of the first aspect, or support the communication apparatus in implementing a function according to any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the call apparatus in the fourth aspect, or the communication system includes the communication apparatus in the fifth aspect and the communication apparatus in the sixth aspect, or the communication system includes the communication apparatus in the seventh aspect and the communication apparatus in the eighth aspect.

For the technical effects brought by any one of the design manners of the third aspect to the twelfth aspect, refer to the technical effects brought by different design manners of the first aspect or the second aspect. Details are not described herein again.

### BRIEF DESCRIPTION OF DRAWINGS

FIG. 1 to FIG. 3 are some diagrams of application scenarios according to this application;
FIG. 4 is a diagram of a communication method according to this application; and
FIG. 5 to FIG. 7 are some diagrams of communication apparatuses according to this application.

### DESCRIPTION OF EMBODIMENTS

The following describes technical solutions of this application with reference to accompanying drawings in this application. All other solutions obtained by a person skilled in the art based on this application without creative efforts shall fall within the protection scope of this application.

First, some terms in this application are described, to facilitate understanding of a person skilled in the art.
(1) A terminal device may be a wireless terminal device that can receive scheduling and indication information of a network device. The wireless terminal device may be a device that provides a user with voice and/or data connectivity, or a handheld device with a wireless connection function, or another processing device connected to a wireless modem.
   The terminal device may communicate with one or more core networks or the Internet by using a radio access network (radio access network, RAN). The terminal device may also be referred to as a terminal, user equipment (user equipment, UE), a mobile station, a mobile terminal, or the like. The terminal device may be widely applied to various scenarios, for example, device-to-device (device-to-device, D2D), vehicle to everything (vehicle to everything, V2X) communication, machine-type communication (machine-type communication, MTC), an internet of things (internet of things, IOT), ultra-reliable and ultra-low latency communication (ultra-reliable low-latency communication, URLLC), virtual reality, augmented reality, industrial control, self-driving, telemedicine, a smart grid, smart furniture, a smart office, a smart wearable device, smart transportation, a smart city, or satellite communication. The terminal may be a mobile phone, a tablet computer, a computer having a wireless transceiver function, a wearable device, a vehicle, an uncrewed aerial vehicle, a helicopter, an airplane, a hot air balloon, a ship, a robot, a mechanical arm, a smart home device, or the like. A device form of the terminal is not limited in embodiments of this application.
(2) A network device may be a device in a wireless network. For example, the network device may be a radio access network (radio access network, RAN) node (or device) that connects a terminal device to a wireless network.

In some implementations, the network device may further include a satellite, an aircraft, and the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus that can support the network device in implementing the function, for example, a processor, a circuit, a chip, or a chip system. The apparatus may be installed in the network device or connected to the network device for use. In the technical solutions provided in this application, an example in which the apparatus configured to implement the function of the network device is the network device is for describing the technical solutions provided in this application.

In this application, an apparatus configured to implement a function of the terminal device may be a terminal device, or may be an apparatus that can support the terminal device in implementing the function, for example, a processor, a circuit, a chip, or a chip system. The apparatus may be installed in the terminal device or connected to the terminal device for use. In the technical solutions provided in this application, an example in which the apparatus configured to implement the function of the terminal device is the terminal device is for describing the technical solutions provided in this application.

(3) The terms "system" and "network" may be used interchangeably in this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in this application are used to distinguish between a plurality of objects, but are not used to limit a sequence, a time sequence, priorities, or importance of the plurality of objects.

This application may be applied to various possible communication systems. For example, this application may be applied to a long term evolution (long term evolution, LTE) system, a new radio (new radio, NR) system, an open access network (open RAN, O-RAN or ORAN), a cloud radio access network (cloud radio access network, CRAN), or a new radio vehicle to everything (NR vehicle to everything, NR V2X) system. Alternatively, this application may be applied to a system in hybrid networking of a plurality of access technologies (for example, LTE and 5G). Alternatively, this application may be applied to a device-to-device (device-to-device, D2D) communication system, a machine-to-machine (machine-to-machine, M2M) communication system, an internet of things (Internet of Things, IoT), or an uncrewed aerial vehicle communication system. Alternatively, this application may be applied to a non-terrestrial communication system, for example, a satellite communication system or a high-altitude communication platform.

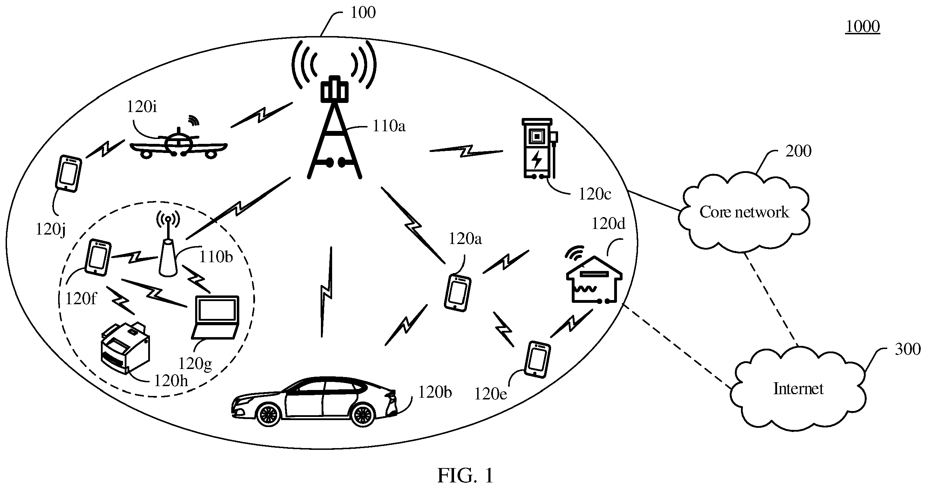

FIG. 1 is a diagram of a possible and non-limiting application scenario according to this application. The solutions provided in this application may be applied to a communication system 1000 shown in FIG. 1. As shown in FIG. 1, the communication system 1000 includes a radio access network (radio access network, RAN) 100 and a core network 200. The RAN 100 may include at least one RAN device (for example, 110a and 110b in FIG. 1, collectively referred to as 110). The RAN 100 may further include at least one terminal (for example, 120a to 120j in FIG. 1, collectively referred to as 120). The terminals 120a to 120j are connected to the RAN device 110 in a wireless manner. The RAN 100 may further include another RAN device, for example, a wireless relay device and/or a wireless backhaul device (not shown in FIG. 1). The access network device 110 is connected to the core network 200 in a wireless or wired manner. A core network device in the core network and the access network device in the radio access network may be different physical devices, or may be a same physical device that integrates a logical function of the core network and a logical function of the radio access network. The terminals may be connected to each other in a wireless manner. The access network devices may be connected to each other in a wired or wireless manner. FIG. 1 is merely a diagram for illustration. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an open access network (open RAN, O-RAN or ORAN), or a cloud radio access network (cloud radio access network, CRAN). Alternatively, the RAN 100 may be a communication system that integrates the foregoing two or more systems.

The RAN device 110 may also be sometimes referred to as a RAN node, a RAN entity, an access node, or the like, and forms a part of the communication system, to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle-mounted device, or the like. For example, an access network device in a vehicle to everything (vehicle to everything, V2X) technology may be a road side unit (road side unit, RSU). A plurality of access network devices in the communication system may be base stations of a same type, or may be base stations of different types. The base station may communicate with a terminal, or may communicate with the terminal via a relay station. The terminal may communicate with a plurality of base stations in different access technologies.

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in radio equipment or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. The CU (or the CU-CP and the CU-UP), the DU, and the RU can implement different protocol layer functions.

Communication between the access network device and the terminal device may comply with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

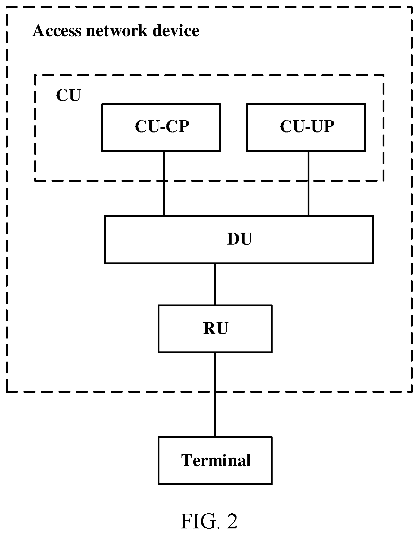

In an implementation example, as shown in FIG. 2, the access network device may include at least one CU and at least one DU. This design may be referred to as CU and DU separation. One CU may be connected to one or more DUs. The CU and the DU may be divided based on a protocol layer of a wireless network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, the functions of the protocol layer above the PDCP layer are set on the CU, and the functions of the protocol layer below the PDCP layer are set on the DU. This is not limited. When the CU includes a CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer. Names of the CU and the DU are not limited in this application. For example, the CU may be referred to as a first access network element, and the DU may be referred to as a second access network element.

The division into the processing functions of the CU and the DU based on protocol layers is merely an example, and may be another division manner. For example, the CU or the DU may have functions of more protocol layers through division, or the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU.

The CU may be connected to the core network. Optionally, the CU may have some functions of the core network.

Further, some functions of the DU may be set separately. As shown in FIG. 2, some functions may be implemented by a radio unit (radio unit, RU). The RU may have a radio frequency function. A name of the RU is not limited in this application. For example, the RU may be referred to as a third access network element. The DU and the RU may be split or separated at the PHY layer. For example, the DU may implement a higher-layer function of the PHY layer, and the RU may implement a lower-layer function of the PHY layer or implement the lower-layer function and the radio frequency function. The higher-layer function of the PHY layer includes a function closer to the MAC layer, and the lower-layer function of the PHY layer includes a function closer to a radio frequency. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT)/inverse fast Fourier transform (inverse fast Fourier transform, IFFT), beamforming, extraction and filtering of a physical random access channel (physical random access channel, PRACH), or the like. The RU may perform radio frequency signal communication with the terminal device through an air interface. A precoding function of the PHY layer may be in the DU or the RU. There may be various possible manners of splitting the DU and the RU. This is not limited.

There is an interface between the DU and the RU. For example, based on different splitting manners, the interface between the DU and the RU may be a common public radio interface (common public radio interface, CPRI) or an enhanced common public radio interface (enhanced common public radio interface, eCPRI).

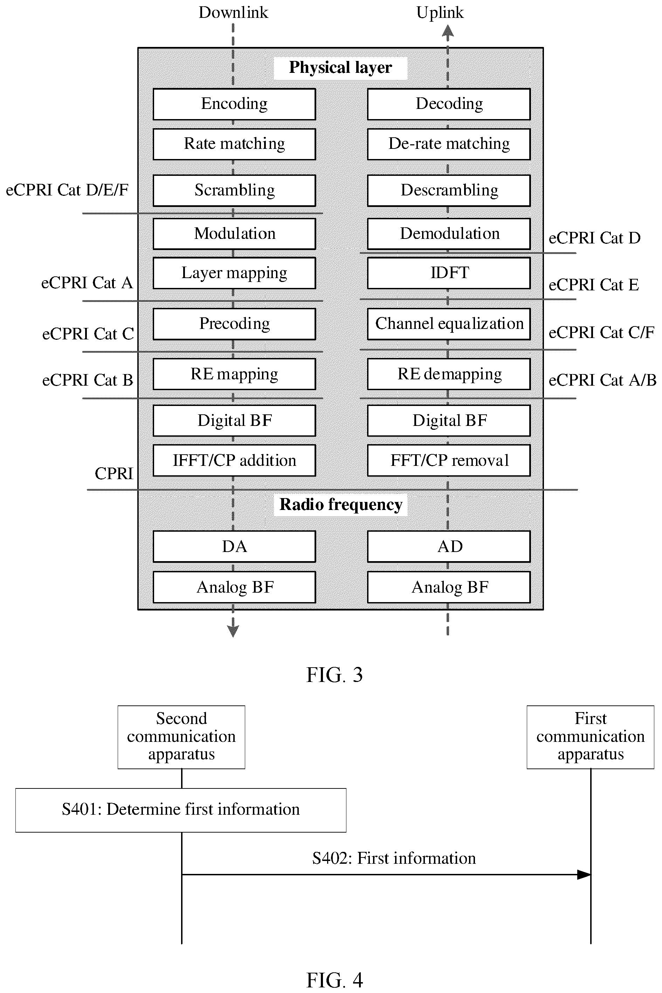

FIG. 3 is a diagram of an architecture of the access network device. The access network device includes one or more functional modules, configured to implement signal processing. As shown in FIG. 3, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast Fourier transform, IFFT)/cyclic prefix (cyclic prefix, CP) addition, decoding, de-rate matching, descrambling, demodulation, inverse discrete Fourier transform (inverse discrete Fourier transform, IDFT), channel equalization (or channel estimation), RE demapping, digital BF, fast Fourier transform (fast Fourier transform, FFT)/CP removal, digital-to-analog (digital-to-analog, DA) conversion, analog BF, analog-to-digital (analog-to-digital, AD) conversion, or analog BF.

The one or more functional modules may be implemented by software, hardware, or a combination of software and hardware. Physically, the functional modules can be discrete or integrated. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) according to a design, or does not include a specific functional module shown in FIG. 3 (for example, not include a digital BF module). The access network device further includes a fronthaul (fronthaul, FH) interface between a DU and an RU, to implement communication between the DU and the RU. The fronthaul interface includes but is not limited to a CPRI or an eCPRI. In a possible implementation, the DU is located in the BBU, the RU is located in the RRU/AAU/RRH, and an interface between the BBU and the RRU/AAU/RRH may also be referred to as a fronthaul interface. To implement the fronthaul interface, the BBU and the RRU/AAU/RRH may be connected by using a fronthaul network, or the DU and the RU may be connected by using a fronthaul network. For example, the fronthaul network includes but is not limited to a fiber direct connection network and a wavelength division network.

The access network device may support one or more categories of fronthaul interfaces, and different fronthaul interfaces correspond to DUs and RUs having different functions. As shown in FIG. 3, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, in comparison with the CPRI, some downlink and/or uplink baseband functions are offloaded from the DU to the RU for implementation. Different manners of splitting the DU and the RU correspond to eCPRIs of different categories (categories, Cats for short). FIG. 3 shows six examples of eCPRIs, which are represented by Cat A, Cat B, Cat C, Cat D, Cat E, and Cat F (which may also be represented as Option A to F, or Option 1 to 6, or in another manner). It may be understood that there may be another manner of splitting the DU and the RU, that is, there may be an eCPRI of another category.

The eCPRI Cat A is used as an example. For downlink transmission, with layer mapping as a splitting point, the DU is configured to implement the layer mapping and one or more functions (that is, one or more of encoding, rate matching, scrambling, modulation, and the layer mapping) before the layer mapping, and another function (for example, one or more of RE mapping, digital BF, or IFFT/CP addition) after the layer mapping is moved to the RU for implementation. For uplink transmission, with RE demapping as a splitting point, the DU is configured to implement the demapping and one or more functions (that is, one or more of decoding, de-rate matching, descrambling, demodulation, IDFT, channel equalization, and the RE demapping) before the demapping, and another function (for example, one or more of digital BF or FFT/CP removal) after the demapping is moved to the RU for implementation.

Similarly, the eCPRI Cat B, the eCPRI Cat C, the eCPRI Cat D, the eCPRI Cat E, and the eCPRI Cat F correspond to different manners of splitting the DU and the RU. A splitting point and a function before the splitting point are implemented by the DU, and a function after the splitting point is implemented by the RU. For splitting points for eCPRIs of various categories, refer to FIG. 3. Details are not described. For example, for the eCPRI Cat B, for downlink transmission, RE mapping is used as a splitting point, and for uplink transmission, RE demapping is used as a splitting point. For uplink transmission, the RE mapping and a function before the RE mapping are implemented by the DU, and a function after the RE mapping and a radio frequency function are implemented by the RU. For downlink transmission, the RE demapping and a function before the RE demapping are implemented by the DU, and a function after the RE demapping and a radio frequency function are implemented by the RU.

Splitting manners for the eCPRIs may be symmetric for an uplink and a downlink, for example, for the eCPRI Cat B and the eCPRI Cat C shown in FIG. 3. Alternatively, splitting manners for the eCPRIs may be asymmetric for an uplink and a downlink, for example, for the eCPRI Cat A, the eCPRI Cat D, the eCPRI Cat E, and the eCPRI Cat F shown in FIG. 3. This is not limited. Optionally, for the uplink and/or the downlink, different splitting manners may be configured for different channels or different channel groups, that is, eCPRIs of different categories are configured. One group of channels may include one or more channels.

In a possible design, the DU is located in the BBU, the RU is located in the RRU/AAU/RRH, a processing module configured to implement a baseband function in the BBU is referred to as a baseband high (baseband high, BBH) unit, and a processing module configured to implement a baseband function in the RRU/AAU/RRH is referred to as a baseband low (baseband low, BBL) unit.

In a wireless communication scenario, the network device may be deployed in a distributed manner. For example, function entities configured to process signals in the network device are split, some of the function entities are carried on a specific device, and the other function entities are carried on another device, to improve a coverage capability and deployment flexibility of the network device.

For example, the network device is a base station, and the base station includes the BBU and the RRU. During current application in the industry, a splitting point of a base station function is usually selected in a manual configuration manner (or a factory preconfiguration manner) before a base station service starts (where for example, the splitting point may be the eCPRI Cat B, the eCPRI Cat C, the eCPRI Cat D, the eCPRI Cat E, or the eCPRI Cat F described in FIG. 3). In addition, after the service starts, the base station uses a same and fixed splitting point for all terminal devices connected to the base station, that is, the base station does not modify the splitting point. For data of any terminal device connected to the base station, the BBU performs a data processing process of some base station functions, and the RRU performs a data processing process of other base station functions. In the foregoing implementation process, management of data transmission between the BBU and the RRU on a control plane is simplified. However, the manual configuration manner consumes a large quantity of labor and material resources, and when there are a large quantity of BBUs and RRUs, the manual configuration manner is inefficient. Particularly, when the BBU and the RRU are from different manufacturers, because each manufacturer implements a splitting manner independently, and splitting points in an uplink direction and a downlink direction are also independent, product configurations provided by different manufacturers may be incompatible, and interconnection between products of different manufacturers can be implemented only when a professional technical person performs a configuration/commissioning process or another process on site.

In conclusion, how to implement efficient configuration of a communication manner between different function entities in the network device is an urgent technical problem to be resolved.

To resolve the foregoing problem, this application provides a communication method and a related device, so that a communication apparatus can perform communication on a link between a radio frequency unit and a distributed unit in a target signal processing manner in N signal processing manners based on an indication of first information, and can implement communication between the radio frequency unit and the distributed unit without manual configuration, thereby reducing consumption of labor and material resources, and improving flexibility of communication between the radio frequency unit and the distributed unit. The following provides detailed descriptions with reference to more accompanying drawings.

FIG. 4 is a diagram of a communication method according to this application. The method includes the following steps.

S401: A second communication apparatus determines first information. The first information indicates a target signal processing manner in N signal processing manners, and N is an integer greater than 1.

Optionally, the first information may include an identifier, an index number, a version number, or another implementation of the target signal processing manner in the N signal processing manners. This is not limited herein.

S402: The second communication apparatus sends the first information, and correspondingly, a first communication apparatus receives the first information. In addition, after step S402, the first communication apparatus performs communication on a link between a radio frequency unit and a distributed unit in the target signal processing manner in the N signal processing manners based on an indication of the first information.

It should be understood that in this application, the radio frequency unit (radio unit, RU) is a network device having a radio frequency signal processing function, the distributed unit (distributed unit, DU) is a network device having a baseband signal processing function, and the radio frequency unit and the distributed unit may have other names.

For example, the radio frequency unit is radio equipment (radio equipment, RE) and the distributed unit is a radio equipment controller (radio equipment controller, REC).

For another example, the radio frequency unit is a remote radio unit (remote radio unit, RRU) and the distributed unit is a building baseband unit (building baseband unit, BBU).

For another example, the radio frequency unit is an active antenna unit (active antenna unit, AAU) and the distributed unit is a BBU.

For another example, the radio frequency unit is a radio unit (radio unit, RU) and the distributed unit is a digital unit (digital unit, DU).

Optionally, the link between the radio frequency unit and the distributed unit may be referred to as a fronthaul link, a fronthaul network, or the like.

Optionally, a communication interface between the radio frequency unit and the distributed unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

In a possible implementation, in the method shown in FIG. 4, before step S401, the method further includes: The second communication apparatus receives second information, where the second information indicates that the N signal processing manners are supported, and the first information is determined based on the second information. Specifically, in step S401, before the second communication apparatus sends the first information, the second communication apparatus may further receive the second information indicating that the first communication apparatus supports the N signal processing manners, so that the second communication apparatus can use the second information as one of bases for determining the first information in step S401, to enable a target signal processing manner determined by the second communication apparatus to be a signal processing manner supported by the first communication apparatus, so as to avoid incompatibility.

Optionally, the second information may include identifiers, index numbers, version numbers, or other implementations of the N signal processing manners. This is not limited herein.

Optionally, the second communication apparatus may further determine the second information in a preconfiguration manner, a manual configuration manner, or another manner. This is not limited herein.

Optionally, before that the second communication apparatus receives second information, the method further includes: The second communication apparatus sends third information, where the third information is used to request pairing. Specifically, before the second communication apparatus receives the second information indicating that the N signal processing manners are supported, the second communication apparatus may further send the third information used to request pairing, so that after the first communication apparatus receives the third information, the first communication apparatus can trigger sending of the second information based on the third information. Therefore, the foregoing technical solution can be applied to a scenario in which the second communication apparatus actively initiates a pairing request.

Optionally, the third information (or the first information, the second information, or the like mentioned below) is used to request pairing, and may be expressed as being used to discover (discover) the first communication apparatus, or being used to request to access the first communication apparatus, or may be expressed in another manner. This is not limited herein.

Optionally, before that the second communication apparatus receives second information, the method further includes: The second communication apparatus receives other information used to request pairing, to implement pairing by using the other information.

In a possible implementation, the first information sent by the second communication apparatus in step S402 is further used to request pairing, or the second information is further used to request pairing. Specifically, the first information sent by the second communication apparatus (or the second information received by the second communication apparatus) may be further used to request pairing, to reduce overheads by multiplexing the first information and the second information.

In a possible implementation, the second information received by the second communication apparatus further indicates priorities of the N signal processing manners, and the target signal processing manner is determined based on the priorities of the N signal processing manners. Specifically, the second information received by the second communication apparatus may further indicate the priorities of the N signal processing manners, so that the second communication apparatus can use the priorities as one of the bases for determining the first information, to enable the first information determined by the receiver to meet the priorities.

In a possible implementation, the first communication apparatus may be the radio frequency unit, so that after step S402, the radio frequency unit can clearly perform communication on the link between the radio frequency unit and the distributed unit in the target signal processing manner in the N signal processing manners based on the first information from the distributed unit (or a network management device). Alternatively, the first communication apparatus may be the distributed unit, so that after step S402, the distributed unit can clearly perform communication on the link between the radio frequency unit and the distributed unit in the target signal processing manner in the N signal processing manners based on the first information from the radio frequency unit (or the network management device). Correspondingly, the second communication apparatus may alternatively be implemented in a plurality of manners. The following provides detailed descriptions by using the following implementation examples.

Implementation example 1: The second communication apparatus is a radio frequency unit. The second information in the foregoing implementation process is from the distributed unit. Specifically, the second information from the distributed unit may indicate that the distributed unit supports the N signal processing manners, so that the radio frequency unit serves as a decision party of a signal processing manner, to implement a process of determining a signal processing manner on the link between the radio frequency unit and the distributed unit.

In a possible implementation of the implementation example 1, the first information is determined based on the second information and fourth information, where the fourth information indicates M signal processing manners supported by the radio frequency unit on the link, M is a positive integer, and the target signal processing manner is included in the M signal processing manners. Specifically, when the second communication apparatus is the radio frequency unit, the target signal processing manner used for communication on the link between the radio frequency unit and the distributed unit may be further determined based on the fourth information. The fourth information indicates the M signal processing manners supported by the radio frequency unit on the link, to enable all target signal processing manners determined by the radio frequency unit to be signal processing manners supported by the radio frequency unit and the distributed unit, so as to avoid incompatibility.

Optionally, in the implementation example 1, the radio frequency unit may determine the fourth information in a preconfiguration manner, a manual configuration manner, or another manner. This is not limited herein.

In a possible implementation of the implementation example 1, the method further includes: The second communication apparatus receives first indication information. When the first indication information indicates to determine the target signal processing manner based on a priority corresponding to the radio frequency unit, the second communication apparatus determines the target signal processing manner based on priorities of the M signal processing manners; and/or when the first indication information indicates to determine the target signal processing manner based on a priority corresponding to the distributed unit, the second communication apparatus determines the target signal processing manner based on the priorities of the N signal processing manners.

Optionally, M is equal to N.

Specifically, when the second communication apparatus is a radio frequency unit, the radio frequency unit may further receive the first indication information, so that the radio frequency unit clearly determines, based on the first indication information, that the priority corresponding to the radio frequency unit (or the distributed unit) is used as one of bases for determining the target signal processing manner.

Optionally, in the implementation example 1, the first indication information may be from the network management device, the distributed unit, or another device. This is not limited herein.

Implementation example 2: The second communication apparatus is a distributed unit. The second information in the foregoing implementation process is from the radio frequency unit. Specifically, when the second communication apparatus is the distributed unit, the second information from the radio frequency unit may indicate that the radio frequency unit supports the N signal processing manners, so that the distributed unit serves as a decision party of a signal processing manner, to implement a process of determining a signal processing manner on the link between the radio frequency unit and the distributed unit.

In a possible implementation of the implementation example 2, the first information is determined based on the second information and fifth information, where the fifth information indicates K signal processing manners supported by the distributed unit on the link, K is a positive integer, and the target signal processing manner is included in the K signal processing manners.

Optionally, K is equal to N.

Specifically, when the second communication apparatus is the distributed unit, the target signal processing manner used for communication on the link between the radio frequency unit and the distributed unit may be further determined based on the fifth information. The fifth information indicates the M signal processing manners supported by the distributed unit on the link, to enable all target signal processing manners determined by the distributed unit to be signal processing manners supported by the radio frequency unit and the distributed unit, so as to avoid incompatibility.

Optionally, in the implementation example 2, the distributed unit may determine the fifth information in a preconfiguration manner, a manual configuration manner, or another manner. This is not limited herein.

In a possible implementation of the implementation example 2, the method further includes: The second communication apparatus receives second indication information. When the second indication information indicates to determine the target signal processing manner based on a priority corresponding to the radio frequency unit, the second communication apparatus determines the target signal processing manner based on the priorities of the N signal processing manners; and/or when the first indication information indicates to determine the target signal processing manner based on a priority corresponding to the distributed unit, the second communication apparatus determines the target signal processing manner based on priorities of the K signal processing manners. Specifically, when the second communication apparatus is the distributed unit, the distributed unit may further receive the second indication information, so that the distributed unit clearly determines, based on the second indication information, that the priority corresponding to the radio frequency unit (or the distributed unit) is used as one of bases for determining the target signal processing manner.

Optionally, in the implementation example 2, the second indication information may be from the network management device, the distributed unit, or another device. This is not limited herein.

Implementation example 3: The second communication apparatus is a network management device. The second information in the foregoing implementation process is from the distributed unit. The first information is determined based on the second information and fifth information. The fifth information indicates K signal processing manners supported by the distributed unit on the link, K is a positive integer, and the target signal processing manner is included in the K signal processing manners. Specifically, when the second communication apparatus is the network management device (for example, a remote network management device, an operation maintenance center (Operation Management Center, OMC), or a base station control unit), the second information from the distributed unit may indicate that the distributed unit supports the K signal processing manners, so that the network management device serves as a decision party of a signal processing manner, to implement a process of determining a signal processing manner on the link between the radio frequency unit and the distributed unit.

In a possible implementation of the implementation example 3, the method further includes: The second communication apparatus receives the fifth information. Specifically, when the second communication apparatus is the network management device, the second communication apparatus may further receive the fifth information from the distributed unit, to determine, by interacting with the distributed unit, the K signal processing manners supported by the distributed unit on the link.

Optionally, the network management device may determine the fifth information in a preconfiguration manner or a manual configuration manner.

Implementation example 4: The second communication apparatus is a network management device. The second information in the foregoing implementation process is from the radio frequency unit. The first information is determined based on the second information and fourth information. The fourth information indicates M signal processing manners supported by the radio frequency unit on the link, M is a positive integer, and the target signal processing manner is included in the M signal processing manners. Specifically, when the second communication apparatus is the network management device (for example, a remote network management device, an operation maintenance center (Operation Management Center, OMC), or a base station control unit), the second information from the radio frequency unit may indicate that the radio frequency unit supports the M signal processing manners, so that the network management device serves as a decision party of a signal processing manner, to implement a process of determining a signal processing manner on the link between the radio frequency unit and the distributed unit.

In a possible implementation of the implementation example 4, the method further includes: The second communication apparatus receives the fourth information. Specifically, when the foregoing method is applied to the network management device, the second communication apparatus may further receive the fourth information from the radio frequency unit, to determine, by interacting with the radio frequency unit, the M signal processing manners supported by the radio frequency unit on the link.

Optionally, the network management device may determine the fourth information in a preconfiguration manner or a manual configuration manner.

In a possible implementation, in step S401, the N signal processing manners in the first information include a downlink signal processing manner, and the downlink signal processing manner indicates to perform at least one of the following processing on a downlink signal: encoding, rate matching, scrambling, modulation, layer mapping, precoding, resource element (resource element, RE) mapping, digital beam mapping (beamforming, BF), inverse fast Fourier transform (invert fast Fourier transform, IFFT), cyclic prefix (cyclic prefix, CP) addition, digital-to-analog conversion, or analog BF. Specifically, the N signal processing manners used for communication on the link between the radio frequency unit and the distributed unit may include the downlink signal processing manner. The downlink signal processing manner may indicate at least one of the foregoing processing processes corresponding to the downlink signal transmitted on the link by the radio frequency unit (or the distributed unit), to improve flexibility of implementing the solution.

It should be understood that in this application, the downlink signal may be understood as a signal sent by a network device (where the network device includes the radio frequency unit and/or the distributed unit) to a terminal device, and an uplink signal mentioned below may be understood as a signal sent by the terminal device to the network device.

In a possible implementation, in step S401, the N signal processing manners in the first information include an uplink signal processing manner, and the uplink signal processing manner indicates to perform at least one of the following processing on an uplink signal: decoding, de-rate matching, descrambling, demodulation, inverse discrete Fourier transform (inverse discrete Fourier transform, IDFT), channel equalization, RE demapping, digital BF, fast Fourier transform (fast Fourier transform, FFT), CP removal, analog-to-digital conversion, or analog BF. Specifically, the N signal processing manners used for communication on the link between the radio frequency unit and the distributed unit may include the uplink signal processing manner. The uplink signal processing manner may indicate at least one of the foregoing processing processes corresponding to the uplink signal transmitted on the link by the radio frequency unit (or the distributed unit), to improve flexibility of implementing the solution.

Optionally, the downlink signal processing manner and the uplink signal processing manner may be some implementations specified in a current standard/protocol, for example, any one of the CPRI, the eCPRI Cat A, and the eCPRI Cat F in FIG. 3.

Optionally, the downlink signal processing manner and the uplink signal processing manner may be other implementations that are not involved in the current standard/protocol. For example, encoding may be performed on a downlink signal sent by the distributed unit to the radio frequency unit, so that the radio frequency unit subsequently performs other physical layer processing. For another example, encoding and rate matching may be performed on a downlink signal sent by the distributed unit to the radio frequency unit, so that the radio frequency unit subsequently performs other physical layer processing. For another example, FFT/CP removal may be performed on an uplink signal sent by the radio frequency unit to the distributed unit, so that the distributed unit subsequently performs other physical layer processing. For another example, FFT/CP removal, digital BF, RE demapping, channel equalization, IDFT, and demodulation may be performed on an uplink signal sent by the radio frequency unit to the distributed unit, so that the distributed unit subsequently performs other physical layer processing.

Based on the technical solution shown in FIG. 4, the first information received by the first communication apparatus in step S402 indicates the target signal processing manner in the N signal processing manners, and the first communication apparatus performs communication on the link between the radio frequency unit and the distributed unit in the target signal processing manner. Therefore, in comparison with an implementation process in which the radio frequency unit and the distributed unit that support a plurality of signal processing manners can be compatible with each other only through manual configuration, in the foregoing technical solution, the communication apparatus can perform communication on the link between the radio frequency unit and the distributed unit in the target signal processing manner in the N signal processing manners based on an indication of the first information, and can implement communication between the radio frequency unit and the distributed unit without manual configuration, thereby reducing consumption of labor and material resources, and improving flexibility of communication between the radio frequency unit and the distributed unit.

In addition, based on the foregoing implementation process, when the distributed unit and the radio frequency unit are from different manufacturers, the distributed unit or the radio frequency unit may be used as the first communication apparatus (or the second communication apparatus) to perform the foregoing process. It has been clarified that communication is performed on the link between the radio frequency unit and the distributed unit in the target signal processing manner in the N signal processing manners, and a process such as configuration/tuning performed by a professional technical person on site is not required, so that products of different manufacturers can be interconnected. Therefore, this can reduce consumption of labor and material resources, and improve flexibility of communication between the radio frequency unit and the distributed unit.

To implement functions in the method provided in this application, the devices that perform the foregoing method may include a hardware structure and/or a software module, and implement the functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

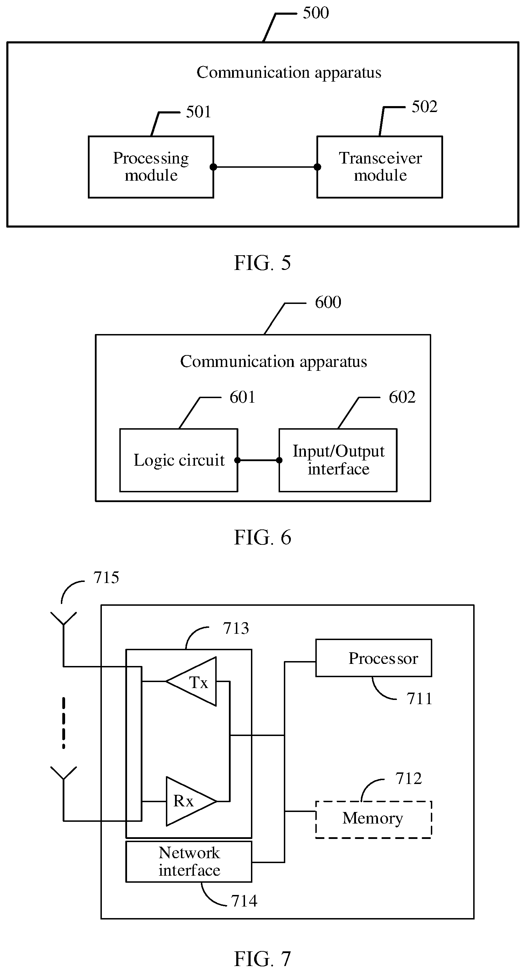

Refer to FIG. 5. This application provides a communication apparatus 500. The apparatus 500 includes a processing module 501 and a transceiver module 502.

In an implementation example, the communication apparatus 500 may implement functions of the first communication apparatus in the foregoing method, and therefore can also implement beneficial effects of the foregoing method. In this application, the communication apparatus 500 may be the first communication apparatus, or may be a software module, an integrated circuit, an element, or the like in the first communication apparatus, for example, a chip. This is not limited. The following uses an example in which the communication apparatus 500 is the first communication apparatus for description.

Specifically, the transceiver module 502 is configured to receive first information, where the first information indicates a target signal processing manner in N signal processing manners, and N is an integer greater than 1. The processing module 501 is configured to perform communication on a link between a radio frequency unit and a distributed unit in the target signal processing manner.

In a possible implementation, the transceiver module 502 is further configured to send second information, where the second information indicates that the N signal processing manners are supported.

In a possible implementation, the transceiver module 502 is further configured to receive third information, where the third information is used to request pairing.

In a possible implementation, the second information is further used to request pairing.

In a possible implementation, the second information further indicates priorities of the N signal processing manners.

In a possible implementation, the apparatus is used in the radio frequency unit or the distributed unit.

In another implementation example, the communication apparatus 500 may implement functions of the second communication apparatus in the foregoing method, and therefore can also implement beneficial effects of the foregoing method. In this application, the communication apparatus 500 may be a second communication apparatus, or may be a software module, an integrated circuit, an element, or the like in the second communication apparatus, for example, a chip. This is not limited. The following uses an example in which the communication apparatus 500 is the second communication apparatus for description.

Specifically, the processing module 501 is configured to determine first information, where the first information indicates a target signal processing manner in N signal processing manners, and N is an integer greater than 1. The transceiver module 502 is configured to send the first information.

In a possible implementation, the transceiver module 502 is further configured to receive second information, where the second information indicates that the N signal processing manners are supported, and the first information is determined based on the second information.

In a possible implementation, the transceiver module 502 is further configured to send third information, where the third information is used to request pairing.

In a possible implementation, the second information is further used to request pairing.

In a possible implementation, the second information further indicates priorities of the N signal processing manners, and the target signal processing manner is determined based on the priorities of the N signal processing manners.

In a possible implementation, the apparatus is used in the radio frequency unit, and the second information is from the distributed unit.

In a possible implementation, the first information is determined based on the second information and fourth information, where the fourth information indicates M signal processing manners supported by the radio frequency unit on the link, M is a positive integer, and the target signal processing manner is included in the M signal processing manners.

In a possible implementation, the transceiver module 502 is further configured to receive first indication information. When the first indication information indicates to determine the target signal processing manner based on a priority corresponding to the radio frequency unit, the second communication apparatus determines the target signal processing manner based on priorities of the M signal processing manners; and/or when the first indication information indicates to determine the target signal processing manner based on a priority corresponding to the distributed unit, the second communication apparatus determines the target signal processing manner based on the priorities of the N signal processing manners.

In a possible implementation, the apparatus is used in the distributed unit, and the second information is from the radio frequency unit.

In a possible implementation, the first information is determined based on the second information and fifth information, where the fifth information indicates K signal processing manners supported by the distributed unit on the link, K is a positive integer, and the target signal processing manner is included in the K signal processing manners.

In a possible implementation, the transceiver module 502 is further configured to receive second indication information. When the second indication information indicates to determine the target signal processing manner based on the priority corresponding to the radio frequency unit, the second communication apparatus determines the target signal processing manner based on the priorities of the N signal processing manners; and/or when the first indication information indicates to determine the target signal processing manner based on the priority corresponding to the distributed unit, the second communication apparatus determines the target signal processing manner based on priorities of the K signal processing manners.

In a possible implementation, the apparatus is used in a network management device. The second information is from the distributed unit, the first information is determined based on the second information and fifth information, the fifth information indicates K signal processing manners supported by the distributed unit on the link, K is a positive integer, and the target signal processing manner is included in the K signal processing manners.

In a possible implementation, the transceiver module 502 is further configured to receive the fifth information.

In a possible implementation, the apparatus is used in the network management device. The second information is from the radio frequency unit, the first information is determined based on the second information and fourth information, the fourth information indicates M signal processing manners supported by the radio frequency unit on the link, M is a positive integer, and the target signal processing manner is included in the M signal processing manners.

In a possible implementation, the transceiver module 502 is further configured to receive the fourth information.

In a possible implementation, the N signal processing manners include a downlink signal processing manner, and the downlink signal processing manner indicates to perform at least one of the following processing on a downlink signal: encoding, rate matching, scrambling, modulation, layer mapping, precoding, resource element RE mapping, digital beam mapping BF, inverse fast Fourier transform IFFT, cyclic prefix CP addition, digital-to-analog conversion, or analog BF.

In a possible implementation, the N signal processing manners include an uplink signal processing manner, and the uplink signal processing manner indicates to perform at least one of the following processing on an uplink signal: decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

It should be noted that for content such as an information execution process of the units of the communication apparatus 500, refer to descriptions in the foregoing method of this application. Details are not described herein again.

FIG. 6 is another diagram of a structure of a communication apparatus 600 according to this application. The communication apparatus 600 includes at least a logic circuit 601. The communication apparatus 600 may be a chip or an integrated circuit.

Optionally, the communication apparatus further includes an input/output interface 602.

The transceiver module 502 shown in FIG. 5 may be a communication interface. The communication interface may be the input/output interface 602 in FIG. 6. The input/output interface 602 may include an input interface and an output interface. Alternatively, the communication interface may be a transceiver circuit, and the transceiver circuit may include an input interface circuit and an output interface circuit.

Optionally, the logic circuit 601 may be configured to perform first processing on downlink data of a first terminal device to obtain first data, and perform second processing on downlink data of a second terminal device to obtain second data. The input/output interface 602 is configured to send the first data and the second data on a link between a first communication apparatus and a second communication apparatus. The first processing is different from the second processing. It should be understood that the logic circuit 601 and the input/output interface 602 may further perform other steps performed by the first communication apparatus in any one of the foregoing examples, and implement corresponding beneficial effects. Details are not described herein again.

Optionally, the logic circuit 601 is configured to control the input/output interface 602 to receive first data and second data on a link between a first communication apparatus and a second communication apparatus. The first data is obtained by performing first processing based on downlink data of the first terminal device, and the second data is obtained by performing second processing based on downlink data of the second terminal device. The first processing is different from the second processing. It should be understood that the logic circuit 601 and the input/output interface 602 may further perform other steps performed by the second communication apparatus in any one of the foregoing examples, and implement corresponding beneficial effects. Details are not described herein again.

In a possible implementation, the processing module 501 shown in FIG. 5 may be the logic circuit 601 in FIG. 6.

Optionally, the logic circuit 601 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip, or any combination of the foregoing chips or processors.

FIG. 7 is a diagram a structure of a communication apparatus 700 in the foregoing example according to this application. The communication apparatus 700 may be specifically a communication apparatus used as the first communication apparatus or the second communication apparatus in the foregoing example. For a structure of the communication apparatus, refer to the structure shown in FIG. 7.

The communication apparatus 700 includes at least one processor 711 and at least one network interface 714.

Further, optionally, the communication apparatus further includes at least one memory 712, at least one transceiver 713, and one or more antennas 715. The processor 711, the memory 712, the transceiver 713, and the network interface 714 are connected, for example, through a bus. In this application, the connection may include various interfaces, transmission lines, buses, or the like. This is not limited in this application. The antenna 715 is connected to the transceiver 713. The network interface 714 is configured to enable the communication apparatus to communicate with another communication device through a communication link. For example, the network interface 714 may include a network interface between the communication apparatus and a core network device, for example, an S1 interface. The network interface may include a network interface between the communication apparatus and another communication apparatus (for example, another network device or core network device), for example, an X2 or Xn interface.

The processor 711 is mainly configured to: process a communication protocol and communication data, control the entire communication apparatus, execute a software program, and process data of the software program, for example, is configured to support the communication apparatus in performing actions described in the foregoing implementation process. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 711 in FIG. 7. A person skilled in the art may understand that the baseband processor and the central processing unit each may be an independent processor, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 712 may exist independently, and is connected to the processor 711. Optionally, the memory 712 may be integrated with the processor 711, for example, integrated into one chip. The memory 712 can store program code for executing the technical solutions of this application, and the processor 711 controls execution of the program code. Various types of executed computer program code may also be considered as drivers of the processor 711.

FIG. 7 shows only one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 713 may be configured to support receiving or sending of a radio frequency signal between the communication apparatus and a terminal, and the transceiver 713 may be connected to the antenna 715. The transceiver 713 includes a transmitter Tx and a receiver Rx. Specifically, the one or more antennas 715 may receive a radio frequency signal. The receiver Rx in the transceiver 713 is configured to: receive the radio frequency signal from the antenna, convert the radio frequency signal into a digital baseband signal or a digital intermediate frequency signal, and provide the digital baseband signal or the digital intermediate frequency signal for the processor 711, so that the processor 711 further processes the digital baseband signal or the digital intermediate frequency signal, for example, performs demodulation processing and decoding processing. In addition, the transmitter Tx in transceiver 713 is further configured to: receive a modulated digital baseband signal or digital intermediate frequency signal from the processor 711, convert the modulated digital baseband signal or digital intermediate frequency signal into a radio frequency signal, and send the radio frequency signal through the one or more antennas 715. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 713 may also be referred to as a transceiver module, a transceiver machine, a transceiver apparatus, or the like. Optionally, a component that is in the transceiver module and that is configured to implement a receiving function may be considered as a receiving unit, and a component that is in the transceiver module and that is configured to implement a sending function may be considered as a sending unit. In other words, the transceiver module includes the receiving unit and the sending unit. The receiving unit may also be referred to as a receiver, an input port, a receiving circuit, or the like. The sending unit may be referred to as a transmitter, a transmitter machine, a transmitter circuit, or the like.

It should be noted that the communication apparatus 700 shown in FIG. 7 may be specifically configured to implement the steps implemented by the first communication apparatus or the second communication apparatus in the foregoing method, and implement technical effects corresponding to the first communication apparatus or the second communication apparatus. For a specific implementation of the communication apparatus 700 shown in FIG. 7, refer to the descriptions in the foregoing method. Details are not described herein again.

Division into modules in this application is an example, is merely logical function division, and may be other division during actual implementation. In addition, functional modules in this application may be integrated into one processor, or may exist alone physically, or two or more modules are integrated into one module. The integrated module may be implemented in a form of hardware, or may be implemented in a form of a software functional module.

All or a part of the technical solutions provided in this application may be implemented by using software, hardware, firmware, or any combination thereof. When software is used for implementation, all or a part of the technical solutions may be implemented in a form of a computer program product. The computer program product includes one or more computer instructions. When the computer program instructions are loaded and executed on a computer, the procedure or functions according to this application are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, wherein the method comprises:
receiving first information, wherein the first information indicates a target signal processing manner in N signal processing manners, and N is an integer greater than 1; and
performing communication on a link between a radio frequency unit and a distributed unit in the target signal processing manner.

2. The method according to claim 1, wherein before receiving the first information, the method further comprises:
sending second information, wherein the second information indicates that the N signal processing manners are supported.

3. The method according to claim 2, wherein before sending the second information, the method further comprises:
receiving third information, wherein the third information is used to request pairing.

4. The method according to claim 2 or 3, wherein the second information further indicates priorities of the N signal processing manners.

5. The method according to any one of claims 1 to 4, wherein the method is applied to the radio frequency unit or the distributed unit.

6. A communication method, wherein the method comprises:
determining first information, wherein the first information indicates a target signal processing manner in N signal processing manners, and N is an integer greater than 1; and
sending the first information.

7. The method according to claim 6, wherein the method further comprises:
receiving second information, wherein the second information indicates that the N signal processing manners are supported, and the first information is determined based on the second information.

8. The method according to claim 7, wherein before receiving the second information, the method further comprises:
sending third information, wherein the third information is used to request pairing.

9. The method according to claim 7 or 8, wherein the second information further indicates priorities of the N signal processing manners, and the target signal processing manner is determined based on the priorities of the N signal processing manners.

10. The method according to any one of claims 7 to 9, wherein the method is applied to the radio frequency unit; and
the second information is from the distributed unit.

11. The method according to claim 10, wherein the first information is determined based on the second information and fourth information, wherein
the fourth information indicates M signal processing manners supported by the radio frequency unit on the link, M is a positive integer, and the target signal processing manner is comprised in the M signal processing manners.

12. The method according to claim 11, wherein the method further comprises:
receiving first indication information; and
when the first indication information indicates to determine the target signal processing manner based on a priority corresponding to the radio frequency unit, determining the target signal processing manner based on priorities of the M signal processing manners;
and/or
when the first indication information indicates to determine the target signal processing manner based on a priority corresponding to the distributed unit, determining the target signal processing manner based on the priorities of the N signal processing manners.

13. The method according to any one of claims 7 to 9, wherein the method is applied to the distributed unit; and
the second information is from the radio frequency unit.

14. The method according to claim 13, wherein the target signal processing manner is determined based on the second information and fifth information, wherein
the fifth information indicates K signal processing manners supported by the distributed unit on the link, K is a positive integer, and the target signal processing manner is comprised in the K signal processing manners.

15. The method according to claim 14, wherein the method further comprises:
receiving second indication information; and
when the second indication information indicates to determine the target signal processing manner based on a priority corresponding to the radio frequency unit, determining the target signal processing manner based on the priorities of the N signal processing manners;
and/or
when the first indication information indicates to determine the target signal processing manner based on a priority corresponding to the distributed unit, determining the target signal processing manner based on priorities of the K signal processing manners.

16. The method according to any one of claims 7 to 9, wherein the method is applied to a network management device; and
the second information is from the distributed unit, the target signal processing manner is determined based on the second information and fifth information, the fifth information indicates K signal processing manners supported by the distributed unit on the link, K is a positive integer, and the target signal processing manner is comprised in the K signal processing manners.

17. The method according to claim 16, wherein the method further comprises:
receiving the fifth information.

18. The method according to any one of claims 7 to 9, wherein the method is applied to a network management device; and
the second information is from the radio frequency unit, the target signal processing manner is determined based on the second information and fourth information, the fourth information indicates M signal processing manners supported by the radio frequency unit on the link, M is a positive integer, and the target signal processing manner is comprised in the M signal processing manners.

19. The method according to claim 18, wherein the method further comprises:
receiving the fourth information.

20. The method according to any one of claims 1 to 19, wherein the N signal processing manners comprise a downlink signal processing manner, and the downlink signal processing manner indicates to perform at least one of the following processing on a downlink signal:
encoding, rate matching, scrambling, modulation, layer mapping, precoding, resource element RE mapping, digital beam mapping BF, inverse fast Fourier transform IFFT, cyclic prefix CP addition, digital-to-analog conversion, or analog BF.

21. The method according to any one of claims 1 to 20, wherein the N signal processing manners comprise an uplink signal processing manner, and the uplink signal processing manner indicates to perform at least one of the following processing on an uplink signal:
decoding, de-rate matching, descrambling, demodulation, inverse discrete Fourier transform IDFT, channel equalization, RE demapping, digital BF, fast Fourier transform FFT, CP removal, analog-to-digital conversion, or analog BF.

22. A communication apparatus, comprising a unit configured to perform the method according to any one of claims 1 to 5 and claims 20 and 21.

23. A communication apparatus, comprising at least one processor and a memory, wherein the at least one processor is coupled to the memory, and the processor is configured to perform the method according to any one of claims 1 to 5 and claims 20 and 21.

24. A communication apparatus, comprising a unit configured to perform the method according to any one of claims 6 to 21.

25. A communication apparatus, comprising at least one processor and a memory, wherein the at least one processor is coupled to the memory, and the processor is configured to perform the method according to any one of claims 6 to 21.

26. A communication system, comprising the communication apparatuses according to claims 22 and 24, or comprising the communication apparatuses according to claims 23 and 25.

27. A computer-readable storage medium, wherein the medium stores instructions, and when the instructions are executed by a computer, the method according to any one of claims 1 to 21 is implemented.

28. A computer program product, comprising instructions, wherein when the instructions are run on a computer, the computer is enabled to perform the method according to any one of claims 1 to 21.
